Europäisches Patentamt

European Patent Office

Office européen des brevets

(11) Publication number: **0 354 965**
**A1**

# EUROPEAN PATENT APPLICATION
## published in accordance with Art. 158(3) EPC

(21) Application number: 89901305.6

(22) Date of filing: 07.01.89

(86) International application number:
PCT/JP89/00015

(87) International publication number:
WO 89/07288 (10.08.89 89/18)

(51) Int. Cl.⁴ **G05B 19/04**

(30) Priority: 02.02.88 JP 23341/88

(43) Date of publication of application:
21.02.90 Bulletin 90/08

(84) Designated Contracting States:
**DE FR GB**

(71) Applicant: **FANUC LTD**
3580, Shibokusa Aza-Komanba Oshino-mura
Minamitsuru-gun Yamanashi 401-05(JP)

(72) Inventor: **INOUE, Michiya**
39-11, Kuboyama-machi 2-chome
Hachioji-shi Tokyo 192(JP)
Inventor: **YAMAUCHI, Takashi** Fanuc Mansion
Harimomi 6-202
3537-1, Shibokusa Oshino-mura,
Minamitsuru-gun
Yamanashi 401-05(JP)

(74) Representative: **Brunner, Michael John** et al
**GILL JENNINGS & EVERY** 53-64 Chancery
Lane
London WC2A 1HN(GB)

(54) **PROGRAMMABLE CONTROLLER PROVIDED WITH SMALL PROGRAMMING DEVICE.**

(57) A programmable controller (1) connected with a small programming device (2) via a link line (21). The programming device (2) edits a program for the programmable controller (1) and inputs the program to the programmable controller (1). A projection (3) of an inverse L-shape is provided at the upper portion on the back surface of the small programming device (2), and a hole (5) is provided in each of the module cases (4) that constitute the programmable controller (1).

Fig 5

SPECIFICATION

TITLE OF THE INVENTION

PROGRAMMABLE CONTROLLER

ACCOMPANIED BY COMPACT PROGRAMMING EQUIPMENT

TECHNICAL FIELD OF THE INVENTION

This invention relates to an improvement applicable to a programmable controller accompanied by a compact programming equipment. Specifically, this invention relates to an improvement applicable to a means with which a compact programming equipment is attached to a programmable controller.

BACKGROUND OF THE INVENTION

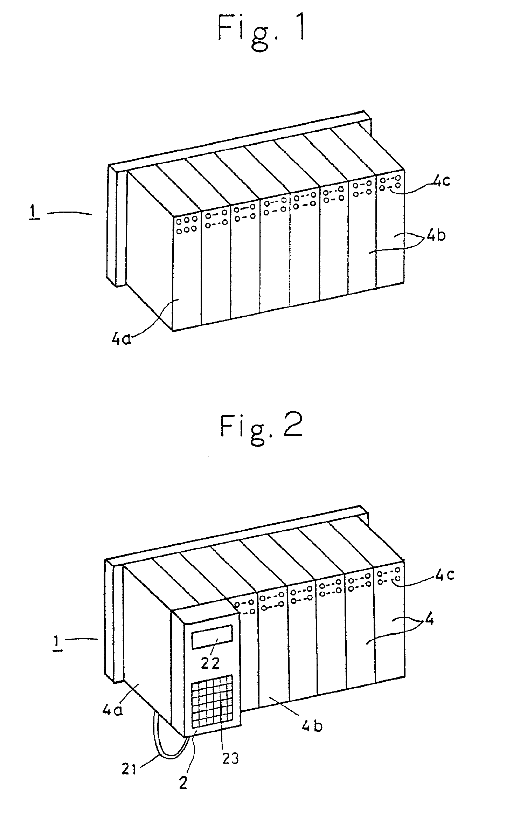

Referring to Fig. 1, a programmable controller 1 consists of a CPU module (illustrated at the extreme left in the drawing) 4a and of input/output (I/O) modules (illustrated at the locations excepting the extreme left in the drawing) 4b, and the CPU module 4a and the input/output (I/O) modules 4b are generally provided display means 4c e.g. LED et al. on the top part of the cases 4 thereof. Some of the programmable controllers are designed to be input a program from outside and the others are designed to compile a program by themselves employing a compact programming equipment which is attached thereto and which is generally of a portable type.

In the latter cases, the compact programming equipment is required to be connected with a CPU module 4a by a connecting wire 21 et al. Referring to Fig. 2 or Fig.

3, a compact programming equipment 2 is attached to a programmable controller 1 by employing screws or a lock mechanism. In case where screws are employed, screws (not shown) provided on a compact programming equipment 2 are engaged with recesses (not shown) provided on a programmable controller 1 e.g. a CPU module 4a. In case where a lock mechanism is employed, a projection having a lock means (not shown) provided on the back of a compact programming equipment 2 is inserted into a recess (not shown) provided on the foregoing programmable controller 1 to allow the foregoing lock means to function.

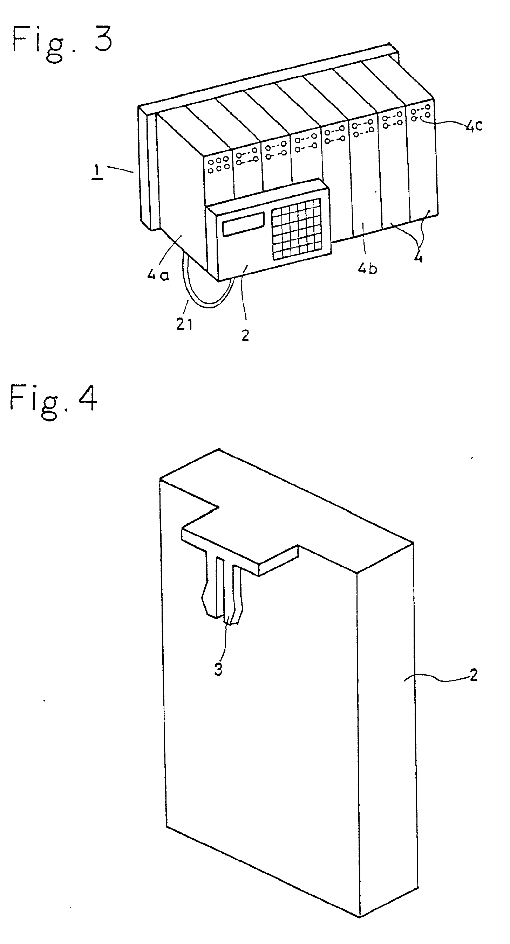

Out of the foregoing two independent systems for attacning a compact programming equipment to a programmable controller, the system which employs screws is involved with a drawback wherein a considerable amount of time and labor is required to attach the compact programming equipment to the programmable controller or detach the compact programming equipment from the programmable controller. The system which employs a lock mechanism is involved with a following drawback. In the case where the compact programming equipment 2 is longitudinal from top to bottom as illustrated in Fig. 2, it disturbs the display means 4c of a programmable controller to properly function. In other words, a longitudinal compact programming equipment 2 as illustrated in Fig. 2 covers the display means 4c arranged on the module case 4 of a programmable controller including the case of a CPU module 4a and the cases of input/output (I/O) modules 4b, resultantly disturbing the operation of the programmable controller. In order to prevent such drawback from occurring, it is not seldom that a transverse compact programming equipment as is illustrated in Fig. 3 has to be employed. However, since a compact programming equipment 2 is often employed, while being held in hands, a transverse compact programming equipment 2 is inconvenient for such purposes.

OBJECTS AND SUMMARY OF THE INVENTION

The object of this invention is to remove these drawbacks and to provide a programmable controller accompanied by a compact programming equipment which is easily attached to or mounted on a programmable controller and/or detached from the programmable controller and which is easily moved onto the other module case to allow the display means which is otherwise prohibited to be observed, particularly even in the cases where the compact programming equipment is longitudinal from top to bottom. In other words, the object of this invention is to provide a programmable controller accompanied by a compact programming equipment which is versatile insofar as the means for attaching a compact programming equipment to the case of a programmable controller.

To achieve the foregoing object, a programmable controller accompanied by a compact programming equipment in accordance with this invention, in which the compact programming equipment (2) having a function for compiling a program for the programmable controller (1) and for inputting the program to the programmable controller (1), is attached to or mounted on the programmable controller (1) and which is connected with the compact programming equipment (2) by a connecting wire (21), is improved by providing the compact programming equipment (2) with a projection (3) having an L shape and extending from the top of the compact programming equipment (2) backward then downward, and by providing each module (4) of the programmable controller (1) with a recess (5) on the top thereof to accept the foregoing L shaped projection (3) therein, resultantly allowing the compact programming equipment (2) to be attached to or mounted on an arbitrary one of the foregoing programmable controller (1).

BRIEF DESCRIPTION OF THE DRAWINGS

A more detailed description will be presented below for a programmable controller accompanied by a compact programming equipment in accordance with one embodiment of this invention, referring to drawings tabulated below.

Fig. 1 is a perspective view of a programmable controller available in the prior art.

Fig. 2 is a perspective view of a programmable controller available in the prior art which is accompanied by a longitudinal compact programming equipment 2.

Fig. 3 is a perspective view of a programmable controller available in the prior art which is accompanied by a transverse compact programming equipment 2.

Fig. 4 is a perspective view of a compact programming equipment which is to be attached to or mounted on a programmable controller accompanied by a compact programming equipment in accordance with an embodiment of this invention.

Fig. 5 is a perspective view of a programmable controller accompanied by a compact programming equipment in accordance with an embodiment of this invention.

Fig. 6 is a side view of a programmable controller accompanied by a compact programming equipment in accordance with an embodiment of this invention.

DETAILED DESCRIPTION OF A PREFERRED EMBODIMENT

Referring to drawings, a detailed description will be presented below for a programmable controller accompanied by a compact programming equipment in accordance with one embodiment of this invention.

Referring to Fig. 4, a compact programming equipment 2 is provided with a projection 3 having an inverse L shape on the top of the back surface thereof. The shape of the projection 3 illustrated in the drawing is one of the examples available therefor and it has no limiting sense to any extent.

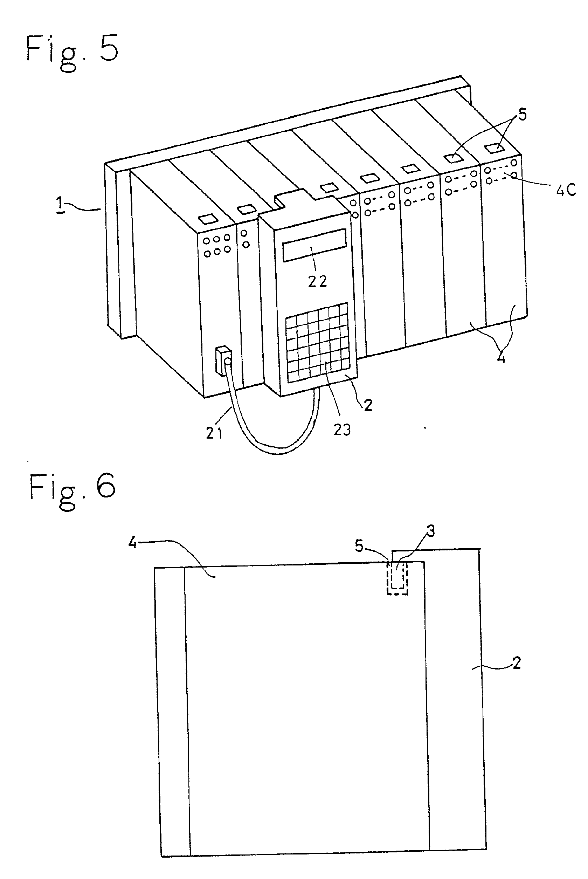

Referring to Fig. 5, a programmable controller 1 is constituted with plural module cases 4. Each of the module cases 4 has a recess 5 on the top thereof for allowing a projection 3 of the foregoing compact programming equipment 2 to be inserted therein. Each of the module cases 4 has also display means 4c. The compact programming equipment 2 is provided a display means 22 and a set of key switches 23 thereon.

Fig. 6 is a side view of a programmable controller accompanied by a compact programming equipment in accordance with one embodiment of this invention, the side view illustrating the position in which the projection 3 of the compact programming equipment 2 is inserted in the recess 5 of each module case 4 of the programmable controller 1.

Since a programmable controller accompanied by a compact programming equipment in accordance with this invention employs a hook which is a combination of an L shaped projection 3 provided on the rear top of the compact programming equipment 2 and a recess 5 provided on the front top of each module case 4 of the programmable controller 1 to accept the foregoing projection 3, rather than a set of screws, the compact programming equipment 2 is allowed to be readily attached to or mounted on an arbitrary one of the module cases 4 of the compact programming equipment 2 and to be readily detached from the foregoing arbitrary one of the module cases 4 of the compact programming equipment 2.

Furthermore, even if an occasion happens in which a longitudinal compact programming equipment 2 covers a display means 4c arranged on a specific module case 4, as a result that the longitudinal compact programming equipment 2 is attached to the specific module case 4 of a programmable controller 1, such an occasion causes no problem for the specific display means 4c to be exposed to the view of an operator, because the specific longitudinal compact programming equipment 2 can be readily moved onto some one else of the display means 4c, if required.

The foregoing description has clarified that this invention has successfully provided a programmable controller accompanied by a compact programming equipment, wherein the compact programming equipment is attached to or mounted on a programmable controller by means of a hook which is a combination of a projection having an inverse L shape provided on the rear top of the compact programming equipment and a recess provided on the front top of each module case of the programmable controller, resultantly allowing the compact programming equipment to be attached to an arbitrary module case of the programmable controller and to be detached from the foregoing module case of the programmable controller, thereby allowing a longitudinal compact programming equipment which is convenient for employing while being held in hands, to be employed, and allowing the longitudinal compact programming equipment to be easily moved onto the other module case, in cases where it otherwise disturbs a display means to be exposed to the view of an operator, resultantly allowing an arbitrary display means of an arbitrary module case to properly function.

CLAIM

1. A programmable controller accompanied by a compact programming equipment, comprising a programmable controller (1) and a compact programming equipment (2) which has a function for compiling a program for said programmable controller (1) and for inputting the program to said programmable controller (1) and which said compact programming equipment (2) is attached to said programmable controller (1) which is connected with said compact programming equipment (2) by a connecting wire (21),

wherein said compact programming equipment (2) has a projection (3) having an L shape and extending from the rear top of said compact programming equipment (2) backward then downward, and each module case (4) of said programmable controller (1) has a recess (5) on the front top thereof to accept said projection (3),

whereby said projection (3) having the inverse L shape of said compact programming equipment (2) is inserted in an arbitrarily selected one of said recesses (5) of said each module case (4) of said programmable controller (1).

Fig. 1

Fig. 2

Fig. 3

Fig. 4

Fig. 5

Fig. 6

# INTERNATIONAL SEARCH REPORT

International Application No   PCT/JP89/00015

## I. CLASSIFICATION OF SUBJECT MATTER (if several classification symbols apply, indicate all) 6

According to International Patent Classification (IPC) or to both National Classification and IPC

Int. Cl⁴   G05B19/04

## II. FIELDS SEARCHED

Minimum Documentation Searched 7

| Classification System | Classification Symbols |
|---|---|
| IPC | G05B19/04 |

Documentation Searched other than Minimum Documentation
to the Extent that such Documents are Included in the Fields Searched 8

| Jitsuyo Shinan Koho | 1932 - 1988 |
|---|---|
| Kokai Jitsuyo Shinan Koho | 1971 - 1988 |

## III. DOCUMENTS CONSIDERED TO BE RELEVANT 9

| Category * | Citation of Document, 11 with indication, where appropriate, of the relevant passages 12 | Relevant to Claim No. 13 |
|---|---|---|
| Y | JP, U, 63-9603 (Yamatake-Honeywell Co.,Ltd.) 22 January 1988 (22. 01. 88) (Family: none) | 1 |
| Y | JP, A, 59-103105 (Koyo Electronics Industries Co., Ltd.) 14 June 1984 (14. 06. 84) (Family: none) | 1 |
| Y | JP, U, 60-62106 (Izumi Denki Kabushiki Kaisha) 1 May 1985 (01. 05. 85) (Family: none) | 1 |
| Y | JP, U, 59-33506 (Koyo Electronics Industries Co., Ltd.) 1 March 1984 (01. 03. 84) (Family: none) | 1 |

* Special categories of cited documents: 10

"A" document defining the general state of the art which is not considered to be of particular relevance

"E" earlier document but published on or after the international filing date

"L" document which may throw doubts on priority claim(s) or which is cited to establish the publication date of another citation or other special reason (as specified)

"O" document referring to an oral disclosure, use, exhibition or other means

"P" document published prior to the international filing date but later than the priority date claimed

"T" later document published after the international filing date or priority date and not in conflict with the application but cited to understand the principle or theory underlying the invention

"X" document of particular relevance; the claimed invention cannot be considered novel or cannot be considered to involve an inventive step

"Y" document of particular relevance; the claimed invention cannot be considered to involve an inventive step when the document is combined with one or more other such documents, such combination being obvious to a person skilled in the art

"&" document member of the same patent family

## IV. CERTIFICATION

| Date of the Actual Completion of the International Search | Date of Mailing of this International Search Report |
|---|---|
| April 1, 1989 (01. 04. 89) | April 17, 1989 (17. 04. 89) |

| International Searching Authority | Signature of Authorized Officer |
|---|---|
| Japanese Patent Office | |

Form PCT ISA/210 (second sheet) (January 1985)